# EUROPEAN PATENT SPECIFICATION

(11) **EP 1 646 941 B1**
(45) Date of publication and mention of the grant of the patent: **15.12.2010**
(21) Application number: 04744489.8
(22) Date of filing: 05.07.2004
(51) Int. Cl.: G06F 9/38

(54) **METHOD AND SYSTEM FOR BRANCH PREDICTION**
VERFAHREN UND SYSTEM ZUR ZWEIGPRÄDIKTION
METHODE ET SYSTEME DE PREDICTION DE BRANCHEMENT

(30) Priority: 09.07.2003 EP 03102064
(43) Date of publication of application: 19.04.2006
(73) Proprietor: NXP B.V., 5656 AG Eindhoven (NL)
(72) Inventor: PESSOLANO, Francesco, NL-5656 AA Eindhoven (NL)
(74) Representative: Williamson, Paul Lewis
(86) International application number: PCT/IB2004/051121
(87) International publication number: WO 2005/006184

(56) References cited:
- WO-A-98/36350
- US-A- 5 729 726
- RECHES S ET AL: "IMPLEMENTATION AND ANALYSIS OF PATH HISTORY IN DYNAMIC BRANCH PREDICTION SCHEMES" PROCEEDINGS OF THE 1997 INTERNATIONAL CONFERENCE ON SUPERCOMPUTING. VIENNA, JULY 7 - 11, 1997, PROCEEDINGS OF THE INTERNATIONAL CONFERENCE ON SUPERCOMPUTING, NEW YORK, ACM, US, vol. CONF. 11, 7 July 1997 (1997-07-07), pages 285-292, XP000755269 ISBN: 0-89791-902-5

## Description

This invention relates to a method and system for branch prediction, which is particularly well suited for use in processors executing sequential programs for programmable integrated circuits.

Branches are points in a program where sequential execution is broken. If a branch is unconditional, its outcome is always the same, i.e. the branch is always taken. When the branch is conditional, however, its outcome is only known when the condition is known. In other words, a conditional branch instruction conditionally causes a transfer of control, based on testing some piece of data. Along with a specification of a target address, such an instruction contains a condition to be tested. This condition is typically one of a small set of algebraic properties of a number. If the condition is met, the branch is taken. Otherwise, it is not taken.

Performance of pipelined processors is severely limited by the time required to execute conditional branches. Such performance degradation caused by conditional branches in pipelined computers arises when the branch is fetched before the algebraic conditions of the data to be tested have been determined. This phenomenon is worst in those computers in which the branch instruction itself specifies the location of the data to be tested. Evaluating the algebraic conditions is done only after several stages of the pipeline have been traversed. Since this cannot start until the branch instruction is fetched, the conditions to be tested are not known until several clock cycles after the branch is fetched. Since the location of the next instruction to be fetched cannot be determined for certain until the data has been tested, no instructions can be fetched for several clock cycles.

In order to reduce such performance degradation, branch prediction techniques may be used. Branch prediction uses the history of the same branch or other branches to predict the current branch outcome. The branch can therefore be executed based on this prediction, in an attempt avoid wasting performance. Of course, every time the predicted outcome proves to be incorrect, the system has to go back to the branching point, the effects of execution of all of the instructions fetched after the incorrectly-predicted branch point must be reversed, and the system must then continue execution via the correct branch outcome. Thus, since all instructions fetched after a bad branch must be discarded, they represent wasted effort, and it is therefore evident that the performance of the machine is directly related to the accuracy of branch predictions.

Various conventional ideas exist for use in branch prediction. Branch prediction schemes can be either static or dynamic. In a static scheme, the branch instruction itself contains the prediction; this is typically supplied by the compiler that produced the program, based on the compiler having executed the program on a typical data set. Static prediction is possible only if the instruction set of the computer has been designed with that in mind. Most commercially successful instruction sets do not provide facilities that allow static branch prediction.

Dynamic branch prediction uses information about the branch that is gathered by the hardware during program execution. The program can only "know" about past execution patterns of a given branch instruction and so must base its dynamic prediction on such information. Since conditional branches are quite frequent, the amount of history that can be stored for each tends not to be very large so as to avoid the need for a very large memory capacity. Typically branch prediction information is kept on only a small, but varying, subset of the branches in a program.

Another idea is known as "bimodal" branch prediction and involves the use of a two-bit saturating counter as a prediction indicator to indicate whether a branch should be taken. A two-bit saturating counter makes use of the assumption that branches should be taken in groups, such that whether a branch or group of branches should be taken may be predicted by reference to whether the last branch or group of branches were taken.

Various known methods of branch prediction are described in for example, International Patent Application No. WO 98/36350, US Patent No. 5,896,529, US Patent No. 6,438,656 B1, and US Patent No. 5,948,100.

Thus, in summary, in the prior art, branch prediction tends to be primarily based on a combination of the following two ideas:
- prediction of a branch outcome based on its history. In this case, a table is generally used to store the outcome of the last, say, 2 or 4 times the branch was executed. Based on the most frequent outcome, a prediction is made. It should be evident, however, that prediction confidence will vary. For example, if the branch outcome has always been the same, then the confidence will be 100%. However, if the branch outcome changes every time, confidence will be 0%.
- prediction of a branch outcome based on the outcome of the previous *n* branches. The actions and implementation are similar to the aforementioned concept, but the information on which prediction is based is obviously different. Once again, prediction confidence will vary greatly.

When branch prediction confidence is not very high, the prediction is likely to fail.

We have now devised an improved arrangement.

In accordance with the present invention, there is provided apparatus for predicting the outcome of a conditional branch within a computer system, the apparatus comprising means for identifying the occurrence of a conditional branch, means for obtaining data relating to system activity since a previous branch, means for comparing said data with data relating to previous system activity, and means for predicting the branch outcome based on such comparison.

Also in accordance with the present invention, there is provided a method for predicting the outcome of a conditional branch within a computer system, the method comprising the steps of identifying the occurrence of a conditional branch, obtaining data relating to system activity since a previous branch, comparing said data with data relating to previous system activity, and predicting the branch outcome based on such comparison.

In a preferred embodiment, the data relating to system activity comprises average system activity. An activity history table is preferably provided in which is stored data relating to previous system activity and the branch outcome to which such activity corresponded. Thus, in a preferred embodiment, when a conditional branch is encountered, data relating the system activity between the current and previous branches is retrieved (preferably from an activity monitor), this data is compared with the data contained in the activity history table, and the branch outcome is selected which has associated therewith activity data which most closely resembles the current retrieved activity data. The activity history table is then preferably updated accordingly with the latest activity data and the selected branch outcome.

In a preferred embodiment, the apparatus also includes means for predicting the outcome of a conditional branch using the outcome history of that and/or previous branches. Beneficially, the data relating to the activity of the system is only used for branch outcome prediction if the confidence of accuracy of branch outcome prediction using branch history is relatively low, perhaps below a predetermined threshold value.

In the prior art, branch prediction takes into account branch history but not the system activity which leads to this history. The present invention proposes the use of another parameter for branch prediction, namely the activity of the system between the last predicted branch and the current branch, activity related to how much computation has been done.

Activity monitoring is basically a measure of the difference between the previous state of a system and the current one for the same system (or part of a system). The larger the difference, the greater is the system activity. There are several ways to implement an activity monitor and these will be apparent to a person skilled in the art. The simpler one involves monitoring the supply current, which also gives the activity for the system. It is normally possible to measure the average current with circuits well known in literature and thus monitor the average activity. An exemplary activity monitor is described in more detail later.

These and other features of the present invention are capable of being elucidated by and from the accompanying exemplary drawings and description that follows.

An embodiment of the present invention will now be described by way of example only and with reference to the accompanying drawings, in which:
Figure 1 is a schematic flow diagram illustrating a branch prediction method according to an exemplary embodiment of the present invention;
Figure 2 is a schematic circuit diagram illustrating the basic principle of operation of an activity monitor for use in an exemplary embodiment of the present invention; and
Figure 3 illustrates a generic embodiment of an exemplary activity monitor.

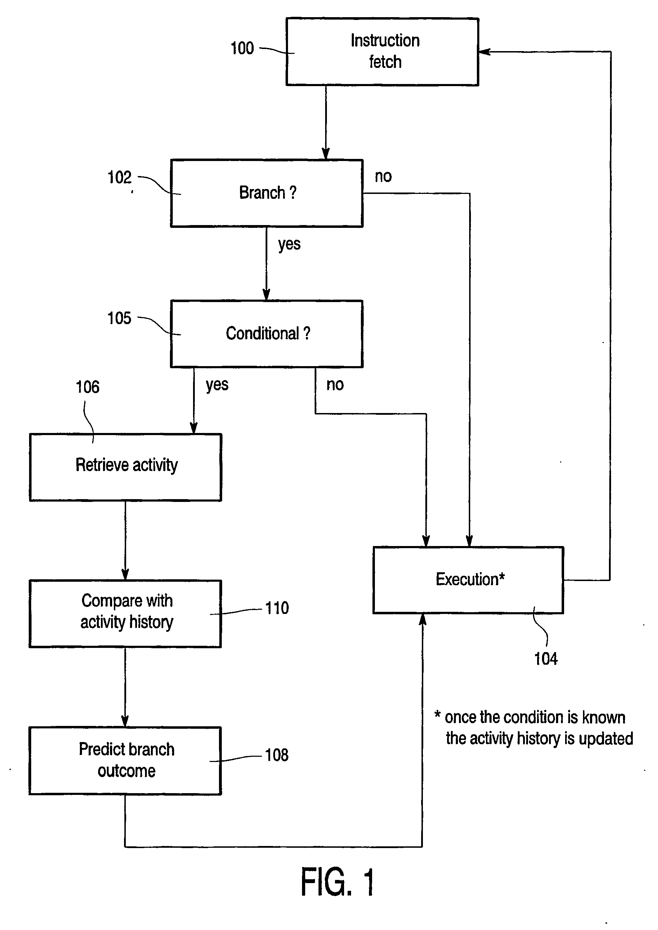

Referring to Figure 1 of the drawings, there is illustrated a flow diagram illustrating a method of branch prediction according to an exemplary embodiment of the present invention.

At step 100, an instruction is fetched, and a determination is made (at step 102) as to whether or not it is a branch. If it is not a branch, the instruction is executed (step 104). If it is a branch, a determination is made (step 105) as to whether or not it is conditional. If not, the instruction is executed (step 104), otherwise data relating to the activity of the system for the last basic block (i.e. the block of code between the last predicted branch and the current branch) is retrieved at step 106. An activity history table is provided in which data relating to average system activity is stored in association with respective outcomes. The retrieved activity data is compared (at step110) and the branch outcome is predicted (step 108) by selecting the outcome stored in the activity history table, which has the most similar activity to the retrieved activity data. The branch is then executed accordingly (step 104) and the table is updated to reflect the latest system activity data and predicted branch outcome. Then, the next instruction is fetched and the process is carried out again.

Thus, in summary, the use of system activity for branch prediction involves:
- storing the average activity for every branch outcome;
- comparing the activity of the last basic block with these values; and
- predicting the branch outcome based on which of the stored outcomes has the most similar activity.

In a preferred embodiment, the comparison step involves comparing only some of the most significant digits in the retrieved activity value.

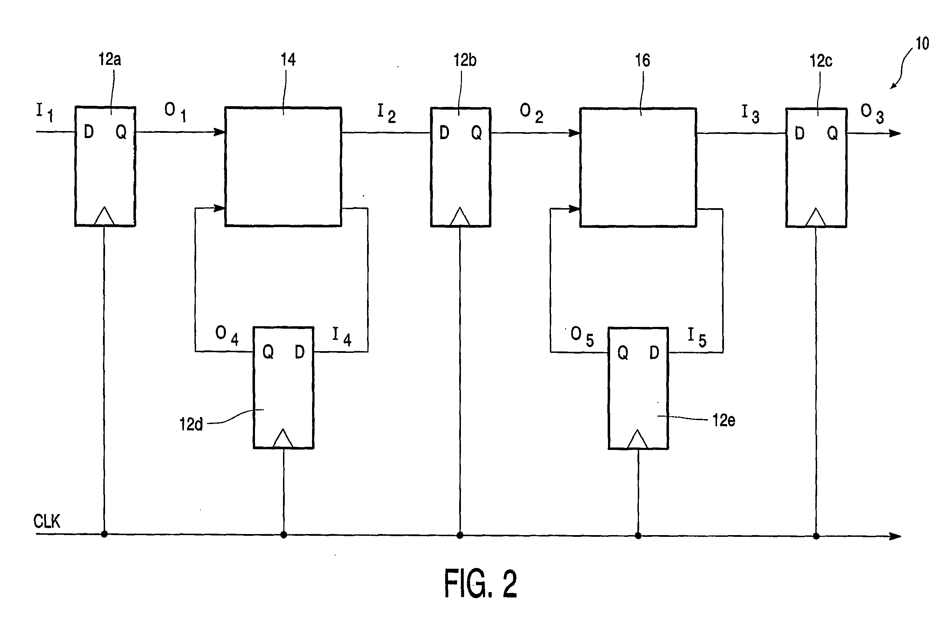

Referring to Figure 2 of the drawings, a circuit diagram of an activity monitor is shown which may be used to obtain the various activity values required to carry out the method described above. However, it will be appreciated by a person skilled in the art that there are numerous different types of system activity monitors known in the art, any of which may be used in conjunction with the present invention.

The illustrated activity monitor 10 comprises a series of D-type latches, sometimes referred to as flip-flops or sequential logic, 12a-12e and two combinational logic blocks 14, 16.

It should be noted that for the purposes of describing this exemplary embodiment of an activity monitor, D-type flip-flops have been described and illustrated. However, the objects of this type of circuitry, as will be apparent to those skilled in the art, can also be achieved by the use of other logic, sequential or otherwise, such as, for example, J-K or S-R type flip-flops. Furthermore, the combinational logic blocks 14, 16 are intended as non-exhaustive illustrations of, for example, a processing logic block and a data path logic block.

In use, flip-flop 12a receives an input signal I1 and produces an appropriate output signal O1, which acts as a first input signal to the first logic block 14. Flip-flop 12b receives an input signal I2, which is a first output signal from the first logic block 14, and produces an appropriate output signal 02, which acts as a first input signal to the second logic block 16. Flip-flop 12c receives an input signal I3, which is a first output signal from the second logic block 16, and produces an appropriate output signal 03. Flip0flop 12d receives an input signal I4, which is a second output signal from the first logic block 14, and produces an appropriate output signal 04, which acts as a second input signal to the first logic block 14. Flip-flop 12e receives an input signal I5, which is a second output signal from the second logic block 16, and produces an appropriate output signal O5, which acts as a second input signal to the second logic block 16. Each of the flip-flops 12a-12e also receives a clock signal CLK, which is used to operatively gate input and output signals.

If the data content of any of the flip-flops 12a-12e does not change, then there are no logic state changes (i.e. no system activity). If, however, a state change does occur within one or more of the flip-flops 12a-12e and either one or both of the logic blocks 14, 16, or a respective portion thereof, due to an appropriate stimulus, then this state change propagates through the circuitry 10. Therefore, for a given clock cycle, the system activity is proportional to the number of state changes that take place within the elements that comprise the circuitry 10. Therefore, knowing the number of elements that change state in a given clock cycle provides a direct correlation to the system activity for that particular clock cycle. It should be noted that modem digital IC methodologies and tools allow designers to know in advance, and with a great deal of circuitry, what state changes are taking place, in response to input stimuli, and where such changes take place. Such advance knowledge is obviously advantageous for the purposes of the present invention.

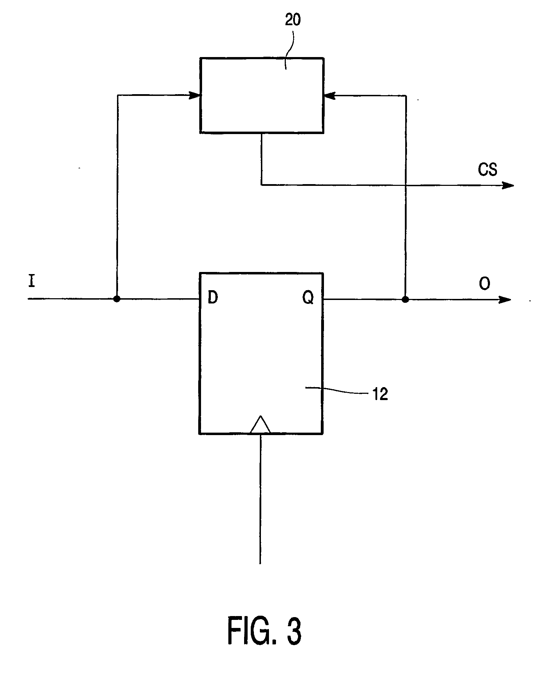

Referring to Figure 3 of the drawings, the activity monitor 20 is the basic building block used for the purpose of monitoring activity of the circuit described with reference to Figure 2 of the drawings. The flip-flop or logic state 12 has, in this particular example, an associated two input, one output activity monitor 20. A first input of the activity monitor 20 is connected to the input D of the flip-flop 12 and a second input of the activity monitor 20 is connected to the output Q of the flip-flop12. The activity monitor 20 produces an output signal CS which is determined by the state of the input and output signals I, O on the respective D and Q terminals of the flip-flop 12.

Thus, the implementation of the present invention can be much the same as it is for conventional branch prediction with the addition of a structure for monitoring system activity. The invention can be used on its own, but is preferably used in conjunction with the conventional branch prediction scheme(s). Preferably, the scheme proposed by the present invention would only be used when the confidence of the other methods is very low. The use of system activity monitoring in branch prediction improves prediction accuracy by considering system/core activity.

It should be noted that the above-mentioned embodiment illustrates rather than limits the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. Apparatus for predicting the outcome of a conditional branch within a computer system, the apparatus comprising means for identifying the occurrence of a conditional branch, means (20) for obtaining data relating to system activity since a previous branch, means for comparing said data with data relating to previous system activity, and means for predicting the branch outcome based on such comparison.

2. Apparatus according to claim 1, wherein the data relating to system activity comprises average system activity.

3. Apparatus according to claim 1 or claim 2, wherein an activity history table is provided in which is stored data relating to previous system activity and the branch outcome to which such activity corresponded.

4. Apparatus according to claim 3, comprising means for, when a conditional branch is encountered, retrieving data relating the system activity between the current and previous branches, and means for comparing this data with the data contained in the activity history table, wherein said means for predicting the branch outcome selects the branch outcome which has associated therewith activity data which most closely resembles the current retrieved activity data.

5. Apparatus according to claim 4, wherein the activity history table updated with the latest activity data and the selected branch outcome.

6. Apparatus according to any one of the preceding claims, including means for predicting the outcome of a conditional branch using the outcome history of that and/or previous branches.

7. Apparatus according to claim 7, wherein data relating to the activity of the system is only used for branch outcome prediction if the confidence of accuracy of branch outcome prediction using branch history is relatively low.

8. A method for predicting the outcome of a conditional branch within a computer system, the method comprising the steps of identifying (105) the occurrence of a conditional branch, obtaining (106) data relating to system activity since a previous branch, comparing (110) said data with data relating to previous system activity, and predicting (108) the branch outcome based on such comparison.

## Patentansprüche

1. Apparat zum Vorhersagen des Ergebnisses einer bedingten Verzweigung innerhalb eines Computersystems, wobei der Apparat Mittel zum Identifizieren des Auftretens einer bedingten Verzweigung, Mittel (20) zum Erhalten von Daten, welche Systemaktivität seit einer vorherigen Verzweigung betreffen, Mittel zum Vergleichen der Daten mit Daten, welche vorherige Systemaktivität betreffen, und Mittel zum Vorhersagen des Verzweigungsergebnisses basierend auf einem solchen Vergleich aufweist.

2. Apparat nach Anspruch 1, wobei die Daten, welche Systemaktivität betreffen, eine mittlere Systemaktivität aufweisen.

3. Apparat nach Anspruch 1 oder 2, wobei eine Aktivitätsvorgeschichtetabelle bereitgestellt ist, in welcher Daten gespeichert sind, welche vorherige Systemaktivität betreffen und das Verzweigungsergebnis, welchem solche Aktivität entspricht.

4. Apparat nach Anspruch 3, aufweisend Mittel zum, wenn eine bedingte Verzweigung auftritt, Abrufen von Daten, welche die Systemaktivität zwischen der momentanen und der vorherigen Verzweigung betreffen, und Mittel zum Vergleichen dieser Daten mit den Daten, welche in der Aktivitätsvorgeschichtetabelle enthalten sind, wobei das Mittel zum Vorhersagen des Verzweigungsergebnisses das Verzweigungsergebnis auswählt, welches damit Aktivitätsdaten assoziiert hat, welche den momentan abgerufenen Aktivitätsdaten am genauesten ähneln.

5. Apparat nach Anspruch 4, wobei die Aktivitätsvorgeschichtetabelle mit den spätesten Aktivitätsdaten und dem ausgewählten Verzweigungsergebnis aktualisiert wird.

6. Apparat nach einem der vorhergehenden Ansprüche, umfassend Mittel zum Vorhersagen des Ergebnisses einer bedingten Verzweigung unter Benutzung der Ergebnisvorgeschichte dieser und/oder vorheriger Verzweigungen.

7. Apparat nach Anspruch 6, wobei Daten, welche die Aktivität des Systems betreffen, nur für Verzweigungsergebnisvorhersage benutzt werden, wenn die Vertrauenswürdigkeit einer Genauigkeit einer Verzweigungsergebnisvorhersage unter Benutzung der Verzweigungsvorgeschichte relativ niedrig ist.

8. Verfahren zum Vorhersagen des Ergebnisses einer bedingten Verzweigung innerhalb eines Computersystems, wobei das Verfahren die Schritte eines Identifizierens (105) des Auftretens einer bedingten Verzweigung, eines Erhaltens (106) von Daten, welche Systemaktivität seit einer vorherigen Verzweigung betreffen, eines Vergleichens (110) der Daten mit Daten, welche vorherige Systemaktivität betreffen, und eines Vorhersagens (108) des Verzweigungsergebnisses basierend auf einem solchen Vergleich aufweist.

## Revendications

1. Appareil destiné à prédire le résultat d'un branchement conditionnel à l'intérieur d'un système informatique, l'appareil comprenant un moyen pour identifier la survenance d'un branchement conditionnel, un moyen (20) pour obtenir des données relatives à une activité de système depuis un branchement précédent, un moyen pour comparer lesdites données à des données relatives à une activité de système précédente, et un moyen pour prédire le résultat du branchement sur la base de ladite comparaison.

2. Appareil selon la revendication 1, dans lequel les données relatives à l'activité de système comprennent une activité de système moyenne.

3. Appareil selon la revendication 1 ou 2, dans lequel il est fourni une table d'historique d'activité dans laquelle sont stockées des données relatives à une activité de système précédente et le résultat de branchement auquel une telle activité a correspondu.

4. Appareil selon la revendication 3, comprenant un moyen pour, lorsqu'un branchement conditionnel est rencontré, extraire des données relatives à l'activité de système entre le branchement actuel et le branchement précédent, et un moyen pour comparer ces données aux données contenues dans la table d'historique d'activité, dans lequel ledit moyen pour prédire le résultat de branchement sélectionne le résultat de branchement auquel sont associées des données d'activité qui ressemblent le plus étroitement aux données d'activité extraites actuelles.

5. Appareil selon la revendication 4, dans lequel la table d'historique d'activité est mise à jour avec les plus récentes données d'activité et le résultat de branchement sélectionné.

6. Appareil selon l'une quelconque des revendications précédentes, comprenant un moyen pour prédire le résultat d'un branchement conditionnel en utilisant l'historique de résultats de ce branchement et/ou de branchements précédents.

7. Appareil selon la revendication 7, dans lequel les données relatives à l'activité du système ne sont utilisées que pour la prédiction de résultat de branchement si la confiance dans la précision de la prédiction de résultat de branchement en utilisant l'historique de branchement est relativement faible.

8. Procédé destiné à prédire le résultat d'un branchement conditionnel à l'intérieur d'un système informatique, le procédé comprenant les étapes consistant à identifier (105) la survenance d'un branchement conditionnel, obtenir (106) des données relatives à l'activité de système depuis un branchement précédent, comparer (110) lesdites données aux données relatives à l'activité de système précédente, et prédire (108) le résultat de branchement sur la base d'une telle comparaison.
